(19) **Europäisches Patentamt / European Patent Office / Office européen des brevets**

(11) **EP 1 662 188 B1**

(12) **FASCICULE DE BREVET EUROPEEN**

(45) Date de publication et mention
de la délivrance du brevet:
**19.03.2008 Bulletin 2008/12**

(51) Int Cl.:
***F16K 1/52*** *(2006.01)*

(21) Numéro de dépôt: **04447264.5**

(22) Date de dépôt: **29.11.2004**

(54) **Vanne à clapet avec variation de perte de charge**

Ventil mit Druckverlustschwankung

Valve with pressure drop variation

(84) Etats contractants désignés:
**AT BE BG CH CY CZ DE DK EE ES FI FR GB GR HU IE IS IT LI LU MC NL PL PT RO SE SI SK TR**

(43) Date de publication de la demande:
**31.05.2006 Bulletin 2006/22**

(73) Titulaire: **Techspace Aero S.A.**
**4041 Herstal (Milmort) (BE)**

(72) Inventeur: **Saint-Mard, Michel**
**4602 Vise (BE)**

(74) Mandataire: **pronovem**
**Office Van Malderen**
**Bld. de la Sauvenière 85/043**
**4000 Liège (BE)**

(56) Documents cités:
**DE-A1- 2 531 179       DE-U1- 29 702 046**
**GB-A- 2 042 687        US-A- 5 358 212**
**US-A- 5 848 608        US-A1- 2001 032 678**

**Description**

**Objet de l'invention**

La présente invention se rapporte à une vanne à clapet conçue pour présenter une augmentation de la perte de charge de la vanne sur les premiers millimètres de course lors de son ouverture, tout en garantissant un niveau de perte de charge nominal minimum en vanne complètement ouverte. La perte de charge est définie comme la différence entre la pression en amont et la pression en aval de la vanne.

L'invention concerne plus particulièrement le domaine des systèmes hydrauliques nécessitant un équipement fonctionnant de manière significativement différente en régime transitoire et en régime nominal d'ouverture.

En particulier, l'invention est applicable à une vanne pneumatique à ouverture rapide.

**Arrière-plan technologique et état de la technique**

Aujourd'hui, l'adaptation de la perte de charge en transitoire dans une vanne à clapet par l'intermédiaire de l'actionneur n'est pas envisageable, étant donné l'effort important exercé sur le clapet par le fluide lors de l'ouverture.

Dans l'état de la technique, l'adaptation de la loi de perte de charge, par exemple pour que l'écoulement s'établisse plus progressivement, nécessiterait l'adjonction d'une seconde vanne à la première, soit en série, soit en parallèle dans le circuit. En revanche, le besoin d'obtention de performances modifiées dans toute la plage se situant en dehors de la position nominale existe bel et bien dans le cadre d'une application de moteur fusée.

En particulier, on voudrait obtenir une perte de charge significativement plus élevée durant toute la course d'ouverture que celle désirée lorsque la vanne est complètement ouverte.

Certains équipements doivent en effet assurer une perte de charge minimale lorsqu'ils sont dans leur configuration nominale. En revanche, lors d'un fonctionnement particulier, il peut être intéressant que le niveau de perte de charge soit significativement plus élevé par rapport au cas nominal. Les buts poursuivis peuvent être notamment :

- l'identification de la position ouverte ou fermée de l'équipement par mesure de la pression en aval,
- le contrôle d'autres paramètres (débit, pression) du système dans lequel il est intégré pendant le transitoire ou autres.

Le document US-A-5,848,608 décrit une vanne à clapet à échappement lent pour système de mise à vide comprenant un second mécanisme de vanne pour l'ouverture restreinte d'un canal reliant une porte amont (chambre à vide) et une porte aval (pompe) de la vanne, pendant la première moitié du procédé d'échappement, en vue de limiter la vitesse d'échappement. Ce second mécanisme de vanne est incorporé dans le premier mécanisme de vanne. Un actionneur pneumatique de ce second mécanisme de vanne est incorporé dans l'actionneur pneumatique du premier mécanisme de vanne. Un arbre secondaire connectant le clapet secondaire et l'actionneur secondaire est situé à l'intérieur de l'arbre primaire.

**Buts de l'invention**

La présente invention vise à fournir une vanne à clapet présentant une perte de charge significativement plus élevée pendant le transitoire d'ouverture de la vanne par rapport à la perte de charge lorsque celle-ci est totalement ouverte.

Un but complémentaire de l'invention est de garantir les performances demandées de l'équipement dans les conditions de fonctionnement transitoire sans avoir d'impact sur le fonctionnement nominal.

Un autre but de l'invention est d'obtenir une importante augmentation de la perte de charge sur une partie de la course du clapet, grâce à une modification de la forme géométrique de la lumière ou orifice d'ouverture de la vanne, mais sans avoir un impact sur la commande d'ouverture.

**Principaux éléments caractéristiques de l'invention**

La présente invention se rapporte à une vanne "tout ou rien" à clapet commandée par un actionneur et présentant une valeur de perte de charge nominale, de préférence minimale, en position complètement ouverte, caractérisée en ce qu'elle comporte des moyens pour augmenter la perte de charge par rapport à ladite valeur nominale, lorsque la vanne est en régime transitoire d'ouverture, lesdits moyens étant indépendants de toute mise en oeuvre de l'actionneur. Selon la forme d'exécution de l'invention, la vanne comprend une pièce mobile appelée obstacle située en aval d'un clapet mobile, concentrique avec un arbre de la vanne solidaire dudit clapet, capable de coulisser le long de l'arbre, maintenue, en position fermée de la vanne, contre le clapet mobile par un ressort précontraint, solidarisé à son extrémité la plus éloignée du clapet mobile. au corps de vanne fixe et à son autre extrémité audit obstacle et maintenue, en position complètement ouverte de la vanne, à distance du clapet mobile contre une butée située sur un dégagement dudit arbre, la pression aval nominale de la vanne contrecarrant dans ce dernier cas la précontrainte du ressort.

De préférence, la valeur de perte de charge en régime transitoire est au moins dix fois supérieure à la valeur de perte de charge nominale.

La vanne comporte en outre avantageusement des bagues de guidage permettant à l'obstacle de coulisser le long de l'arbre et des joints d'étanchéité dynamiques permettant d'étancher la partie aval de la vanne par rapport à l'extérieur.

Toujours avantageusement, l'obstacle mobile se déplace entre les deux positions extrêmes précitées, lors du régime transitoire régnant lors de l'ouverture de la vanne, avant que celle-ci ne soit totalement ouverte.

Toujours selon l'invention, la précontrainte et la raideur du ressort sont calculés en vérifiant les relations suivantes

$$\text{Précontrainte}_{\text{position basse}} > P_{\text{aval transitoire}} \times S,$$

$$\text{Précontrainte}_{\text{position haute}} < P_{\text{aval nominale}} \times S$$

et

$$\text{Raideur} \ast \text{course} = \text{Précontrainte}_{\text{position haute}} - \text{Précontrainte}_{\text{position basse}},$$

où S est la surface de l'obstacle sur laquelle agit l'effet de fond, c'est-à-dire la force due à la pression aval transitoire ou nominale.

De préférence, le déplacement de l'obstacle mobile est utilisé comme indicateur d'ouverture de la vanne.

## Brève description des figures

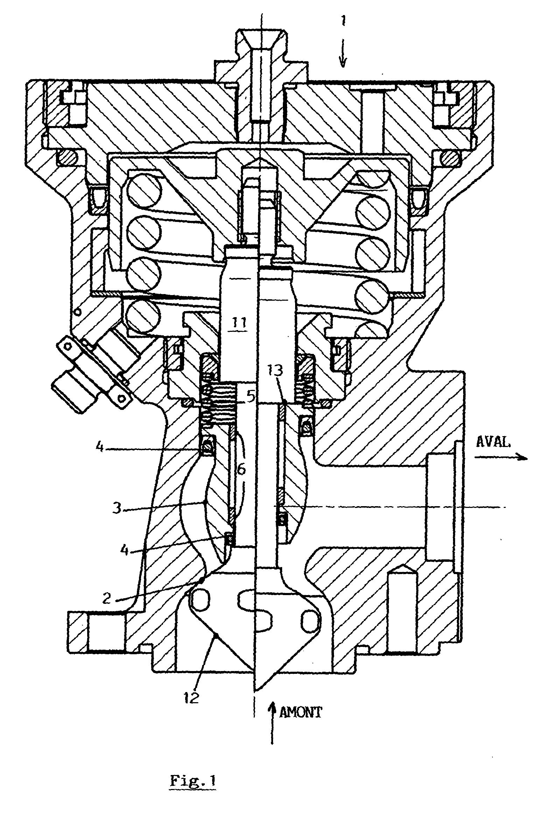

La figure 1 représente une forme d'exécution préférée de vanne à clapet selon la présente invention.

## Description d'une forme d'exécution préférée de l'invention

### Principe

Le principe de l'invention est d'imposer pendant l'ouverture de la vanne un obstacle au niveau de l'écoulement. Cet obstacle, mobile, reste alors dans le chemin pendant toute la durée de la phase transitoire d'ouverture. Une fois la vanne complètement ouverte, l'obstacle se repositionne sous l'effet de la pression.

L'obstacle n'a cependant pas une forme quelconque. Il a une forme telle que, lors de son repositionnement autour du clapet, la forme combinée obstacle/clapet permette d'obtenir les performances nominales recherchées.

La position de l'obstacle mobile est telle que, lors du transitoire d'ouverture, la perte de charge créée ne permette pas à la zone aval d'être sous une pression suffisante que pour remplir la cavité et augmenter la force hydraulique agissant sur l'élément ou obstacle mobile. Celui-ci subit une force trop faible pour être déplacé. Par contre, en fin de course du clapet, c'est-à-dire une fois la vanne presque complètement ouverte, la pression aval peut s'établir naturellement. La force hydraulique est alors plus grande que la force résultante du ressort et des frottements de l'élément mobile, ce qui permet le déplacement de celui-ci et l'obtention de la perte de charge nominale.

### Description technique

La figure 1 montre une vanne à clapet 1 d'une part en position fermée (à gauche) et d'autre part en position complètement ouverte (à droite). Le sens de l'écoulement du fluide lorsque la vanne 1 est ouverte, ainsi que les zones amont et aval sont indiqués sur la figure 1. La vanne 1 comprend un clapet 12 solidaire d'un arbre mobile 11 et reposant côté corps de vanne sur un siège 2, en position d'obturation de la vanne.

Le dispositif selon l'invention est constitué d'une pièce mobile 3, ci-après appelée "obstacle", de deux joints d'étanchéité dynamiques 4, et d'un ressort précontraint 5 assurant le maintien de l'obstacle en position "basse", c'est-à-dire contre le clapet 12, pendant la plus grande partie du fonctionnement transitoire d'ouverture. De plus, l'obstacle 3 est à symétrie de révolution et a le même axe que l'arbre de la vanne 1. L'obstacle 3 est libre de se mouvoir le long de cet arbre, via des bagues de guidage 6.

Il est évident que le réglage de la précontrainte du ressort 5 est un élément très important car c'est lui qui détermine le moment où l'obstacle mobile 3 pourra se déplacer pour venir prendre sa position "haute", c'est-à-dire contre une butée 13 sur un dégagement de l'arbre 11.

Ainsi, lors de l'ouverture de la vanne, de par la présence de l'obstacle, localisé en position basse grâce au ressort précontraint, la perte de charge est très grande le long des premiers millimètres de course. A partir d'une certaine valeur de course, lorsque la vanne est presque complètement ouverte, la pièce mobile se replace en position haute et la perte de charge diminue très fort, par exemple d'un facteur 10, ce qui correspond à une brusque augmentation de la pression aval. Ainsi, le dispositif de l'invention peut aussi servir d'indicateur d'ouverture complète de la vanne. En effet, en fonction de la position de l'obstacle, on sait si la vanne est complètement ouverte ou non.

La précontrainte et la raideur du ressort devront être choisies de manière à vérifier les relations suivantes :

$$\text{Précontrainte }_{\text{position basse}} > P_{\text{aval transitoire}} \times S \quad (1),$$

$$\text{Précontrainte }_{\text{position haute}} < P_{\text{aval nominale}} \times S \quad (2),$$

$$\text{Raideur} \ast \text{course} =$$
$$\text{Précontrainte }_{\text{position haute}} - \text{Précontrainte }_{\text{position basse}} \quad (3),$$

où S est la surface sur laquelle agit l'effet de fond (c'est-à-dire la force due à la pression aval transitoire ou nominale), l'effort hydraulique net agissant sur le ressort étant égal au produit de la raideur du ressort par sa course.

Il est clair la sélection du ressort pourra être légèrement adaptée en fonction de S.

*Avantages*

L'invention présente l'avantage de ne pas dédoubler l'équipement tout en incorporant une fonction supplémentaire assurée précisément par la présence de l'obstacle, sans pour autant perturber le fonctionnement global du système.

**Revendications**

1. Vanne "tout ou rien" à clapet (1) commandée par un actionneur et présentant une valeur de perte de charge nominale, de préférence minimale, en position complètement ouverte, comportant des moyens pour augmenter la perte de charge par rapport à ladite valeur nominale, lorsque la vanne est en régime transitoire d'ouverture, lesdits moyens étant indépendants de toute mise en oeuvre de l'actionneur, **caractérisée en ce que** ces moyens comprennent une pièce mobile appelée obstacle (3) située en aval d'un clapet mobile (12), concentrique avec un arbre (11) de la vanne (1) solidaire dudit clapet (12), capable de coulisser le long de l'arbre (11), maintenue, en position fermée de la vanne, contre le clapet mobile (12) par un ressort précontraint (5), solidarisé à son extrémité la plus éloignée du clapet mobile au corps de vanne fixe et à son autre extrémité audit obstacle (3) et maintenue, en position complètement ouverte de la vanne, à distance du clapet mobile (12) contre une butée (13) située sur un dégagement dudit arbre (11), la pression aval nominale de la vanne contrecarrant dans ce dernier cas la précontrainte du ressort.

2. Vanne selon la revendication 1, **caractérisée en ce qu'**elle comporte en outre des bagues de guidage (6) permettant à l'obstacle (3) de coulisser le long de l'arbre (11) et des joints d'étanchéité dynamiques (4) permettant d'étancher la partie aval de la vanne par rapport à l'extérieur.

3. Vanne selon la revendication 1 ou 2, **caractérisée en ce que** l'obstacle mobile (3) se déplace entre les deux positions extrêmes précitées, lors du régime transitoire régnant lors de l'ouverture de la vanne, avant que celle-ci ne soit totalement ouverte.

4. Vanne selon la revendication 1, 2 ou 3, **caractérisée en ce que** la précontrainte et la raideur du ressort sont calculés en vérifiant les relations suivantes :

$$précontrainte_{\text{position basse}} > P_{\text{aval transitoire}} \times S,$$

$$précontrainte_{\text{position haute}} < P_{\text{aval nominale}} \times S$$

et

$$Raideur*course = précontrainte_{\text{position haute}} - Précontrainte_{\text{position basse}},$$

où S est la surface de l'obstacle sur laquelle agit l'effet de fond, c'est-à-dire la force due à la pression aval transitoire ou nominale.

5. Vanne selon l'une quelconque des revendications 1 à 4, **caractérisée en ce que** le déplacement de l'obstacle mobile (3) est utilisable comme indicateur d'ouverture de la vanne.

## Claims

1. "All-or-nothing" flap valve (1) controlled by an actuator and with a nominal pressure-drop value, preferably a minimum one, in the completely open position, comprising a means for increasing the pressure drop relative to said nominal value when the valve is in the transitional opening phase, said means being totally independent of any operation of the actuator, **characterised in that** this means comprises a movable part called an obstacle (3) positioned downstream from a movable flap (12) which is concentric with a shaft (11) of the valve (1) fixed to said flap (12) and capable of sliding along the shaft (11), held in the closed position of the valve against the movable flap (12) by a pretensioned spring (5), fixed at its end furthest from the movable flap (12) to the body of the fixed valve and at its other end to said obstacle (3) and held, in the completely open position of the valve, at a distance from the movable flap (12) against a stop (13) positioned over a recess of said shaft (11), the nominal downstream pressure of the valve opposing the pretensioning of the spring in this latter case.

2. Valve according to Claim 1, **characterised in that** it also comprises guiding rings (6) that allow the obstacle (3) to slide along the shaft (11) and dynamic sealing gaskets (4) that allow to seal the downstream part of the valve relative to the outside.

3. Valve according to Claim 1 or 2, **characterised in that** the movable obstacle (3) moves between the two above-mentioned extreme positions during the transitional phase occurring when the valve is opening and before the latter is completely opened.

4. Valve according to Claim 1, 2 or 3, **characterised in that** the pretensioning and the stiffness of the spring are calculated by checking the following relationships:

$$Pretensioning_{\text{low position}} > P_{\text{transitional downstream}} \times S,$$

$$Pretensioning_{\text{high position}} < P_{\text{nominal downstream}} \times S$$

and

$$\texttt{Stiffness * movement range = Pretensioning}_{\texttt{high position}} -$$

$$\texttt{Pretensioning}_{\texttt{low position}},$$

where S is the surface of the obstacle on which the downward effect acts, i.e. the force due to the transitional or nominal downstream pressure.

5. Valve according to any one of Claims 1 to 4, **characterised in that** the movement of the movable obstacle (3) can be used as an indicator of how wide open the valve is.


**Patentansprüche**

1. "Auf-zu"- Klappenventil (1), das durch ein Stellglied gesteuert wird und in der vollständig geöffneten Stellung einen vorzugsweise minimalen Nenndruckabfallwert aufweist, das Mittel umfasst, um den Druckabfall in Bezug auf den besagten Nennwert zu erhöhen, wenn sich das Ventil im Übergangsbetriebzustand zur Öffnung befindet, wobei die besagten Mittel unabhängig von jedem Einsatz des Stellgliedes sind, **dadurch gekennzeichnet, dass** diese Mittel ein bewegliches Teil umfassen, das als Hindernis (3) bezeichnet wird, sich unterhalb einer beweglichen Klappe (12) befindet und zu einer Welle (11) des Ventils (1) konzentrisch ist, die mit der besagten Klappe (12) fest verbunden ist, wobei das bewegliche Teil an der Welle (11) entlang gleiten kann und bei geschlossener Stellung des Ventils gegen die bewegliche Klappe (12) durch eine vorgespannte Feder (5) festgehalten wird, welche an ihrem von der beweglichen Klappe am weitesten entfernten Ende mit dem festen Ventilkörper und an ihrem anderen Ende mit dem besagten Hindernis (3) verbunden ist, wobei das bewegliche Teil in der vollständig geöffneten Stellung des Ventils zu der beweglichen Klappe (12) auf Abstand und gegen einen Anschlag (13) gehalten wird, der sich auf einem Freiraum der besagten Welle (11) befindet, wobei der Nennnachdruck des Ventils in diesem Fall die Vorspannung der Feder entgegenarbeitet.

2. Ventil nach Anspruch 1, **dadurch gekennzeichnet, dass** es außerdem Führungsringe (6) umfasst, die es dem Hindernis (3) ermöglichen, an der Welle (11) entlang zu gleiten, und dynamische Dichtungen (4), die die Abdichtung des Bereichs nach dem Ventil gegen das Äußere ermöglichen.

3. Ventil nach Anspruch 1 oder 2, **dadurch gekennzeichnet, dass** das bewegliche Hindernis (3) sich während des Übergangsbetriebzustandes bei der Öffnung des Ventils vor dessen vollständiger Öffnung zwischen die beiden vorstehend genannten Endpositionen bewegt.

4. Ventil nach Anspruch 1, 2 oder 3, **dadurch gekennzeichnet, dass** die Vorspannung und die Steifheit der Feder durch Prüfung der folgenden Beziehungen berechnet werden:

$$\texttt{Vorspannung}_{\texttt{untere Stellung}} > P_{\texttt{Übergangsnachdruck}} \times S$$

$$\texttt{Vorspannung}_{\texttt{obere Stellung}} < P_{\texttt{Nennnachdruck}} \times S$$

und

$$\texttt{Steifheit*Weg} =$$
$$\texttt{Vorspannung}_{\texttt{obere Stellung}} - \texttt{Vorspannung}_{\texttt{untere Stellung}}$$

wobei S die Oberfläche des Hindernisses ist, auf die der Grundeffekt wirkt, d.h. die Kraft aufgrund des Übergangs- oder Nennnachdrucks.

5. Ventil nach einem der vorstehenden Ansprüche 1 bis 4, **dadurch gekennzeichnet, dass** die Bewegung des beweglichen Hindernisses (3) als Ventilöffnungsanzeige verwendbar ist.

Fig.1

**EP 1 662 188 B1**

## RÉFÉRENCES CITÉES DANS LA DESCRIPTION

**Documents brevets cités dans la description**

- US 5848608 A